# EUROPEAN PATENT SPECIFICATION

(11) **EP 2 537 396 B1**
(45) Date of publication and mention of the grant of the patent: **06.05.2020**
(21) Application number: 11744979.3
(22) Date of filing: 21.02.2011
(51) Int. Cl.: H02M 3/335, H05B 33/08, H02M 1/42

(54) **CONTROLLING OUTPUT CURRENT FROM AN ELECTRONIC DRIVE SYSTEM OF FLY-BACK TYPE**
STEUERUNG DES AUSGANGSSTROMS AUS EINEM ELEKTRONISCHEN FLYBACK-ANTRIEBSSYSTEM
RÉGULATION DU COURANT DE SORTIE PROVENANT D'UN SYSTÈME D'ENTRAÎNEMENT ÉLECTRONIQUE DE TYPE INDIRECT

(30) Priority: 19.02.2010 SE 1050163
(43) Date of publication of application: 26.12.2012
(73) Proprietor: Nordic Light Ab, 931 24 Skellefteå (SE)
(72) Inventor: SKÖLD, Niclas, S-931 54 Skellefteå (SE); LINDSTRÖM, Henrik, S-931 54 Skellefteå (SE)
(74) Representative: Zacco Sweden AB
(86) International application number: PCT/SE2011/050191
(87) International publication number: WO 2011/102799

(56) References cited:
- GB-A- 2 047 444
- US-A1- 2006 033 481
- US-A1- 2006 132 061
- US-A1- 2009 187 925
- US-A1- 2009 187 925
- US-B1- 6 369 525
- PAN TIANFU ET AL: "An Improved Single-Stage Flyback PFC Converter for High-Luminance Lighting LED Lamps", ELECTRONIC MEASUREMENT AND INSTRUMENTS, 2007. ICEMI '07. 8TH INTE RNATIONAL CONFERENCE ON, IEEE, PI, 1 August 2007 (2007-08-01), pages 4-212, XP031148656, ISBN: 978-1-4244-1135-1
- PAN TIANFU ET AL.: 'An Improved Single-Stage Flyback PFC Converter for High-Luminance Lighting LED Lamps' 8TH INTERNATIONAL CONFERENCE ONELECTRONIC MEASUREMENT AND INSTRUMENTS, 2007. ICEMI'07 01 August 2007, XP031148656

## Description

The present invention concerns a method for monitoring and controlling the output current from an electronic drive system based on a switched power supply of fly-back type according to the introduction of claim 1, an electronic drive system according to the introduction to claim 7, in particular for use as a drive system for light-emitting diodes, also known as "LEDs". The invention concerns also a use of the drive system according to the invention.

Switched power supplies are used to a great extent for the driving of various types of electronic circuits, not least as drive units for light-emitting diodes, i.e. a load with a Zener characteristic. One of the major advantages of these power supplies is that they have relatively good performance, despite being simple and cheap.

One of the more interesting fields of use for the said power supplies is as part of a drive circuit for light-emitting diodes. A light-emitting diode, or "LED", is a type of semiconductor that emits electromagnetic light waves when a current passes through it, and whose optical power is approximately proportional to the drive current. LEDs are being used to an ever-greater extent for lighting purposes, through the development of semi-conducting material and optical technology of ever-increasing quality. Just as an example, LEDs are used in traffic signals, large information screens, monitors, vehicle lights and in lighting fixtures not only indoors but also outdoors. An LED is a type of semiconductor unit, being a non-linear load that requires a certain minimum voltage (Uf) in order to become conducting, and requiring during operation a certain constant pre-determined direct current (DC). The said voltage (Uf) is the minimum voltage that is required in order for the diode to conduct the correct current. Since LEDs are very sensitive to changes in voltage that arise when the load changes, extremely stable power supplies that can rapidly supply a correct and stable supply voltage to the load are required. The varying requirements by the load for supply current are influenced by a number of different factors, such as ambient conditions, for example, varying temperature. This means that the power supply must be able to supply a correctly adapted supply current, independently of how the load changes. The supply current to the LED must demonstrate a low-amplitude ripple in order to achieve optimal light intensity and operational parameters, i.e. the output current must be very clean and essentially free of ripple currents. Any ripples that arise on the operating current risk being experienced by the human eye as variations in light level and blinking of the LEDs. In order to achieve good operating economy and low power loss, and in order to avoid unnecessary heat production, it is desirable to drive the load of LEDs by a constant current that is as low as possible required to drive the load that appears and to achieve the light intensity that is required.

Power supply units that are currently built for driving LEDs must be able to supply an output voltage within narrow limits and across a very wide range of loads, and this must take place in a cost-effective manner with high power and with low losses. Switched regulators of fly-back type are for this reason used, since they have the major advantage that they deliver a feed voltage that is exactly as large as the load instantaneously requires.

The switched regulators that are used in practice are primarily constituted by power supplies of fly-back type, i.e. rectification during fly-back. This is the topology or circuit configuration that is principally used within this technology. To be more precise, what is used is a converter that contains a transistor as conversion element and as input and output filters. The said switched regulators, however, are associated with certain disadvantages that may cause problems for the driving of LEDs, which are extremely sensitive to having the correct current. An output filter is used to filter the output voltage and an input filter is used in order to prevent transients from the switches reaching the feed voltage source. Both of these filters are normally built up from condensors, whereby there may arise, particularly in the condensors of the output filter, ripple currents that are particularly troublesome for the driving of LEDs, since they are expressed as visible blinking, which can be seen by the human eye, of the LEDs. The problem of ripple current in the fly-back converter mentioned above can be solved, to a certain extent, by complicated dimensioning of the output filter, where the ripple has its greatest effect. Such a solution is not advantageous, particularly for smaller power supplies, up to approximately 30 VDC, partly because the dimensioning of the components requires space, and partly due to reasons of cost.

The publication PAN TIANFU ET AL with the title "An Improved Single-Step Flyback PFC Converter for High-Luminance Lighting LED Lamps" pages 4-212, Electronic measurement and instruments, 2007, ICEMI 2007, ISBN: 978-1-4244-1135-1, discloses a converter for operating a non-linear load comprising LEDs. The converter regulate the duty cycle by measuring the output voltage and store energy in a filter in a primary side capacitor at the AC input. Each of US 2006/0033481 A1, US 2 047 444 A, and US 2009/0187925 A1 disclose drive circuits comprising a linear regulator.

One aim of the present invention, therefore, is to achieve a solution that in a cheap and simple manner makes it possible to control and monitor the output current at electronic drive systems that contain switched power supplies and in this way to make these more suitable for use in driving electronic components, such as light-emitting diodes, that require accurately controlled driving currents. In particular, it is intended to achieve a method to control the output current from a power supply in which the measures taken offer a simple and cheap system with considerably reduced ripple and low power loss. A second aim of the invention is to achieve an electronic drive system with a switched power supply according to the method, in particular for driving a load of light-emitting diodes. A third aim is to achieve technology that allows the regulation of the light intensity of the LEDs.

This is achieved with the method and the electronic drive system according to the present invention defined by claim 1 and claim 5, respectively.

Any aspect, embodiment, implementation, or example described in the following which does not fall within the scope of the claimed invention thus defined is to be interpreted as background information provided to facilitate the understanding of the claimed invention and the subject-matter for which protection is sought is strictly and solely limited to those embodiments encompassed by the scope of the appended claims.

The fundamental idea of the present invention is to achieve dynamic adaptation of the power supply to the load with the appearance of ripple through the use of a combination of two components that are, in themselves, cheap. These components are a switched fly-back power supply and a linear current regulator located on the secondary side of the power supply. According to the invention, the difference between the secondary voltage UCout that is reflected through the transformer of the power supply and the voltage Uout that appears across the load is used as a control signal S1 for the control of the switch SW of the switched fly-back power supply. The difference between UCout and Uout forms the control signal S1. Alternatively, if it is preferred, the control signal is obtained as the fall in voltage across the current regulator. The control signal S1 for the switched fly-back power supply is formed through comparing the said difference with a reference voltage Uref. The present electronic drive system has, due to this method, shown itself to be particularly useful for the driving of light-emitting diodes. It is, furthermore, considerably more cost-effective than currently known solutions, while both the switched power supply of fly-back type and the linear current regulator are relatively cheap products and they can, in combination, deliver an output current with a very low ripple. The system is, in this way, particularly useful for relatively low output voltages and for the driving of small non-linear loads, in the form, for example, of LEDs. It is, naturally, not limited to these uses.

The invention will be described below in more detail with reference to the attached drawings, of which:
Figure 1A shows schematically a block diagram of an electronic drive system for the driving of a load in the form of light-emitting diodes, LEDs, according to the invention,
Figure 1B shows a graph of a first M1 and a second M2 measurement signal for feedback through a loop to the electronic drive system, and the formation of a first control signal S1 fed to the primary side of a power supply,
Figure 2A shows schematically a block diagram of an electronic drive system for the driving of a load in the form of light-emitting diodes corresponding to that shown in Figure 1, but designed as a further development of the invention, equipped with what is known as a "dimmer" regulation of light intensity, and
Figure 2B shows in a diagram graphs of a signal U1 on the primary side of the power supply, a third measurement signal M3 reflected on the secondary side of the power supply for detection of the phase angle, and a second control signal S2 for feedback to a linear current regulator that regulates the feed current to the load of light-emitting diodes during light intensity regulation.

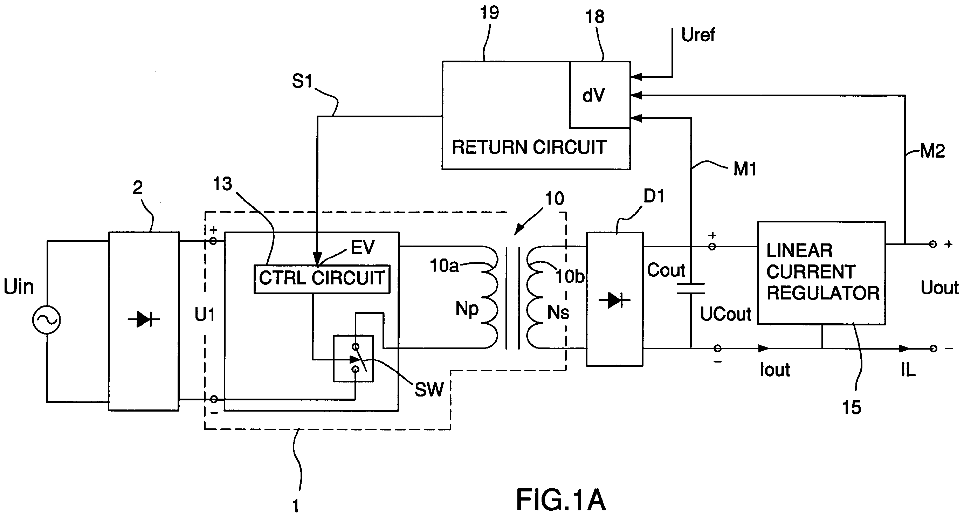

Figure 1A shows schematically a block diagram of an electronic drive system for light-emitting diodes according to the invention.

An electronic drive system according to the invention includes a switched power supply 1 of fly-back type that converts an AC voltage Uin, for example 230-240 V, to a rectified DC voltage U1 that, when fed to the input terminals of the power supply in a rectifier bridge 2, is converted to a DC voltage that, with reference symbol UCout, is present at the output terminals of an output condensor Cout. As Figure 1A makes clear, the power supply lacks an input condensor on the primary side, whereby the rectified DC input voltage is fed into the power supply in its raw unfiltered form, which is essentially half-wave rectified. The purpose of this is to obtain phase information and, as part of the invention, to exploit the phase information that is obtained in this way to control and monitor a dimmer function of the power supply. An AC voltage (Uin), for example 230-240V, is converted to a rectified DC voltage where the breakpoint of the filter exceeds considerably the mains supply frequency. The storage of energy that is required, whose purpose is to filter the contents of the mains supply frequency, is present on the secondary side of the power converter. This will be described in more detail below. The term "frequency ripple", as the expression will be used below, is used to denote the irregularity that remains in a rectified alternating current, whereby the frequency ripple is constituted by the difference between the highest and the lowest values of the current or voltage. The power supply 1 of fly-back type may be of Model L6561, i.e. of TM type with a high PF fly-back configuration and demonstrating in what is, it must be admitted, known manner a transformer 10, through which energy is transferred from the primary side to the secondary side, and a switch SW in the primary circuit. It should be understood that as switched power supply is selected a single-stage type with a high power factor correction, whereby it is appropriate that the power factor correction PF of the supply unit exceed 0.75. The switch interrupts the primary current, which passes through a primary coil 10a and a control circuit 13, which controls the switch, which control circuit controls the output voltage of the power supply by regulating the duty cycle of the switch.

The control takes place by means of pulse width modulation, i.e. by adjusting the relationship between the lengths of the ON and OFF phases of the switch. A rectifier D1 and an output condensor Cout are connected in series in the secondary circuit in parallel with a secondary coil 10b. The reference number 15 denotes a linear current regulator connected to the terminals of the output condensor Cout, at a voltage UCout. A DC voltage Uout is supplied by the linear current regulator 15 for driving a load (not shown in the drawings), but it is appropriate that this consist of LEDs. M1 denotes a first measurement signal taken across the terminals of the output condensor Cout and corresponding to the voltage UCout. M2 denotes a second measurement signal and this corresponds in principle to the DC voltage Uout that appears across the load. Further, 18 denotes a comparator in the form of a differential amplifier dV. The inputs of the comparator 18 are connected not only with the linear current regulator 15, but also with the output condensor Cout, whereby the measurement signals M1 and M2, respectively, are obtained from each one of these. The comparator 18 supplies the first control signal S1, which is delivered through a return circuit 19 in a feedback loop to the control circuit 13 in order to influence the duty cycle of the switch SW. Thus the first control signal S1 serves as a control signal to the primary side of the power supply 1 whereby the said feedback loop forms an integrating circuit whose integration time has been so selected relative to the integral inertia or integration time of the power supply 1 that it has a significantly longer integration time than that of the power supply. The term "integral inertia of the power supply 1" is here used to denote the time required to change the level of energy transfer in response to the condition of the control signal S1. It is preferable that the feedback loop have an integration time that is considerably longer than the integral inertia of the power supply: the feedback loop may, for example, demonstrate an integration time that exceeds the inertia of the power supply by a factor of ten or even higher, in order that the driver unit should obtain a good PF factor. In practice the different integration times are achieved by the integration time of the feedback signal in the feedback loop 18, 19 being significantly increased.

The function of the switched power supply of fly-back type 1 is as follows: When the switch SW is closed (ON), a positive voltage appears across the terminals of the transformer. In this case, a blocking voltage is applied across the rectifier diode D1 at its output, and thus the diode is non-conducting. The consequence of this is that the secondary current is zero when the switch is in its ON position. On the primary side, however, the current that passes through the switch SW increases linearly during the ON condition. The transformer stores energy in its magnetic flux (in the air gap) during this phase, and the transformer is therefore during this period actually an inductance, provided with a secondary coil. When the switch is set to a non-conducting (open, OFF) condition the energy stored in the magnetic flux of the transformer reverses the voltage in the coil (the fly-back phenomenon), in which situation the rectifier diode D1 of the secondary side becomes conducting, and a current starts to flow through the secondary coil of the transformer. In contrast to the primary current, the secondary current falls linearly during the OFF condition. At the same time, the secondary current maintains the required output voltage UCout across the output condensor Cout.

If the load on the output increases, the time during which the switch is in the ON condition is extended, and this leads to the primary current having sufficient time to increase, and the secondary current during the OFF condition is therefore higher, to a corresponding degree. Power supplies of fly-back type can function either in a continuous mode (the secondary energy does not have sufficient time to become fully discharged following the fly-back condition), or in a non-continuous mode, in which the energy is discharged fully at the end of each period. Also power supplies of fly-back type are available that function in continuous and non-continuous modes, independently of the load. The power supply according to the present invention can be any one at all of the types described above.

The number of turns of the primary coil of the transformer is denoted with the symbol Np and the number of turns of the secondary coil is, in a corresponding manner, denoted by the symbol Ns on the drawing. The switch SW is typically of MOSFET type (where MOSFET is an acronym for "metal oxide semi-conductor field effect transistor) or of bipolar type. The control circuit that controls the width of a coupling pulse may function either in voltage mode, which is based upon the output voltage, or in current mode, which is based upon the primary current and the output voltage. Several switched power supplies of fly-back type use current status circuits (through the control of the current status) whereby a better phase margin for the control is obtained than that obtained by voltage status control).

It is appropriate that the control circuit 13 be of the type that functions in current mode and exerts control in response to the control signal S1 that is obtained as the difference between the first and the second measurement signals M1 and M2, on comparison with a reference voltage Uref. The first control signal S1 is thus obtained as the fall in voltage across the linear current divider 15 from the condensor Cout, i.e. M1-M2 relative to Uref forms S1. The said second measurement signal M2 corresponds to that which is obtained across the load of LEDs Uout and is thus measured after the linear current regulator 15 while the voltage UCout is measured across the condensor Cout. The first control signal S1 is obtained based on the result of the difference between the said first and second measurement signals M1 and M2, and, connected to the control circuit 13, is used to regulate the duty cycle of the switch SW. The control signal S1 is supplied to the power supply 1 through a return circuit 19 that is part of the feedback loop from the secondary side to the primary side, of which also the comparator 18 is a part. The innovative idea of the invention is built on the principle that the linear current regulator 15 regulates the current I_{L} through the non-linear load of LEDs between the power supply 1 of fly-back type, while at the same time the switched power supply 1 of fly back type regulates the voltage across the linear current regulator 15 based on the first control signal S1, when viewed from the DC voltage UCout that is present at the terminals of the output condensor Cout. According to a basic principle of the invention, the average difference dV between the first measurement signal M1 and the second measurement signal M2 in the comparator 18 is held as low as possible relative to a reference voltage Uref, but only sufficiently low that the linear current regulator 15 can supply the required current strength for the load that appears at any particular moment. The voltage information is formed though comparing in the comparator 18 the measurement signals M1 (the voltage UCout at the terminals of the output condensor Cout) and M2 (the voltage across the load Uout) with the reference Uref, of which the difference signal dV that is generated in this way is fed back, through the return step 19, to the differential voltage input EV of the control circuit 13 as the said first control signal S1. The control circuit 13 may be of L6561 type (or some other circuit of the same family). It can be pointed out that the linear current regulator 15 regulates solely the current IL through the non-linear load, without itself being affected by the control signal S1. The tasks of the said control signals S1 are, respectively, to deliver information about the fall in voltage across the current regulator 15 in order to form, through the feedback loop to the electronic drive system a first control signal S1 that, when fed to the primary side of the power supply 1, regulates the duty cycle of the switch SW.

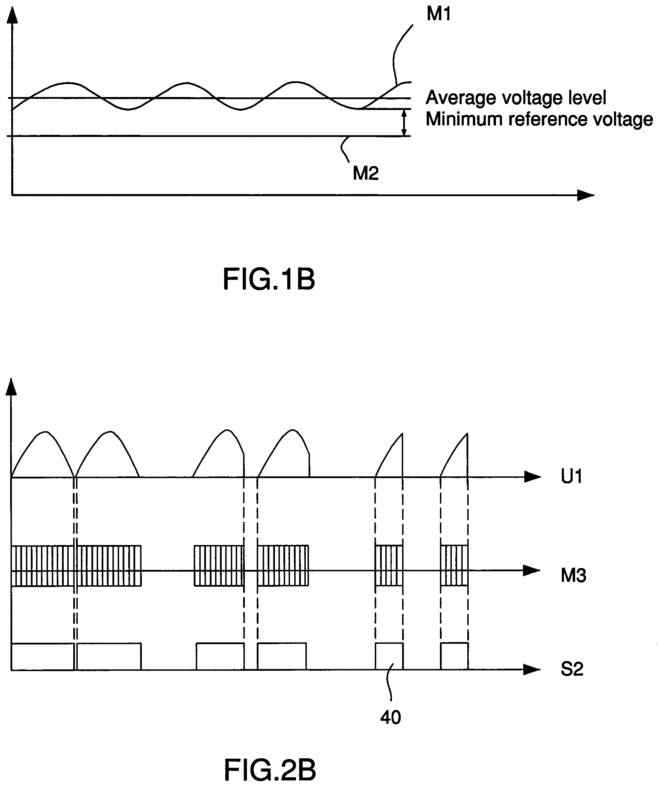

Figure 1B shows how the difference dV between the first measurement signal M1 and the second measurement signal M2 can vary in time, depending on the voltage level. The average difference dV between the first measurement signal M1 and the second measurement signal M2 is held as low as possible during a comparison with a minimum threshold value in the form of a reference voltage Uref, but only sufficiently low that the linear current regulator 15 can supply the required current strength at the load.

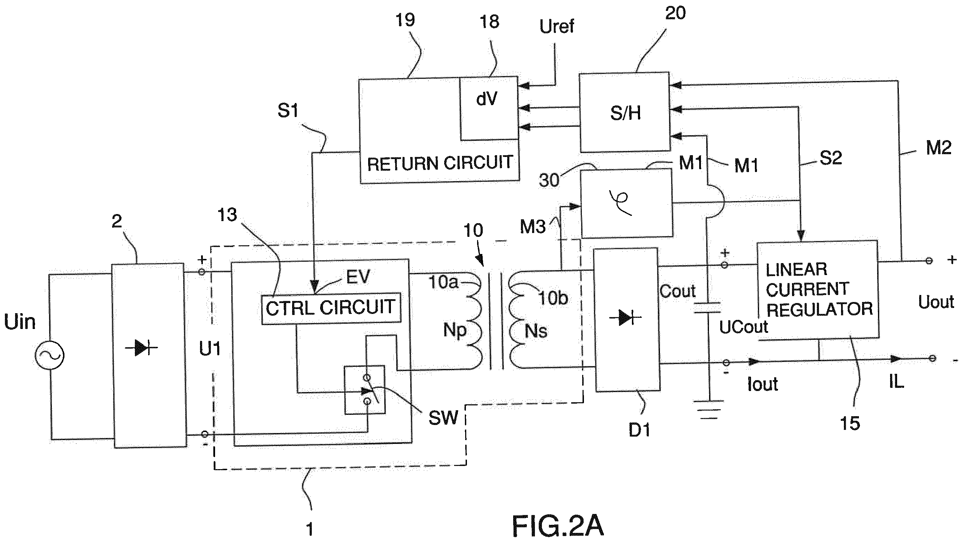

Figure 2A shows schematically in the form of a block diagram a power supply 1 according to the invention in an alternative design and equipped with an arrangement for light intensity regulation, otherwise known as a "dimmer" function. The design in Figure 2A agrees in all essential features with the power supply described above, the switched power supply 1 of fly-back type that converts an AC voltage Uin, for example 230-240 V, to a rectified DC voltage denoted "U1" that, when fed to the input terminals of the power supply in a rectifier bridge 2, is converted to a DC voltage that, with reference symbol UCout, is present at the output terminals of an output condensor Cout. The power supply 1 demonstrates in what is, it must be admitted, known manner a transformer 10, through which energy is transferred from the primary side to the secondary side, and a switch SW in the primary circuit. The switch interrupts the primary current, which passes through a primary coil 10a and a control circuit 13 that controls the switch, which control circuit controls the output voltage by regulating the duty cycle of the switch. The control takes place by means of pulse width modulation, i.e. by adjusting the relationship between the lengths of the ON and OFF phases of the switch. A rectifier diode and an output condensor Cout are connected in series in the secondary circuit in parallel with a secondary coil 10b. The symbol 15 denotes a linear current connected to the terminal UCout of the output condensor Cout and from which is delivered a DC voltage Uout for driving a non-linear load, consisting in this case of LEDs (not shown in the drawing). The symbol 20 denotes a sample and hold (S/H) circuit, while 30 denotes a phase angle detector/comparator that creates a second control signal S2 that is led not only to the S/H circuit 20 but also to the linear current regulator 15. It should be understood that the phase angle of the rectified DC voltage U1, which is fed in its raw, unfiltered form to the input terminals of the power supply through what is known as "phase reflection", has a direct correlation with the energy conversion period of each principal cycle of the electrical mains supply (compare the signals U1 and M3 in Figure 2B). Due to the unfiltered feed of the DC voltage U1 through the transformer 10, it is present in a corresponding reflected form on the secondary side of the transformer 10. According to the invention, the said signals are used in this unfiltered form as control signals to the linear current regulator 15, which in turn adapts its current to the load of LEDs based on them. One of the major advantages with this is that information about the phase angle on the primary side is reflected to the secondary side and can be used to adjust in a linear manner the level of the current regulator 15, or to create through pulse modulation a suitable signal.

As a careful study of Figure 2A will reveal and as has been mentioned above, the voltage information for the third measurement signal M3 is obtained directly from the secondary side of the transformer 10, i.e. immediately before the rectifier D1 and the output condensor Cout. The reflector effect and the difference in phase, or phase displacement, are used not only for control of the current regulator 15 but also for activation of the S/H circuit 20 in order to maintain a correctly adapted return signal (the first control signal S1) to the power supply 1 of fly-back type during the OFF condition of the principal signal.

It is possible to use the principle described above since the stored energy is present on the secondary side of the power supply of fly-back type, in particular it is present at a single-stage power supply of fly-back type with a high PF, information in particular herewith about the phase angle has a direct correlation with the energy conversion during each cycle.

Figure 2A makes it clear how the first measurement signal M1 that is obtained as the voltage UCout across the output condensor Cout, the second measurement signal M2 as the voltage Uout across the load and thus after the linear current regulator 15 and the second control signal S2 (from the phase angle detector/comparator 30) are locked and added in the S/H circuit 20 to be delivered to the comparator 18, whereby the output signal is returned through the return stage 19 as the first control signal S1 to the differential voltage input EV of the control circuit 13 for regulation of the duty cycle of the switch SW. Also here the feedback loop forms an integrating circuit, the integration time of which has been so selected that it is considerably longer (greater inertia) than the integral inertia of the power supply 1. It is preferable that the feedback loop have an integration time that is considerably longer and more extensive than the integral inertia of the power supply: the feedback loop may, for example, demonstrate an integration time that exceeds the inertia of the power supply by a factor of ten or even higher, in order that the driver unit should obtain a good PF factor. In practice the different integration times are achieved by the integration time of the feedback signal in the feedback loop M1, M2, M3, 18, 19 being significantly increased. The principal integration (the integration time) for the power supply 1 (the fly-back stage) thus lies on the secondary side and is managed by the feedback loop. In order for the power supply to obtain a high PF and not risk demonstrating self-oscillation after regulation with, for example 50 Hz, the feedback loop must demonstrate a greater inertia than the power supply. The regulation, however, may not take place on the primary side: all regulation must take place on the secondary side, whereby the difference in inertia is regulated through the feedback loop.

Figure 2B shows graphs in a figure of three signals for the detection of phase angle and for feedback to the electronic drive system for light-emitting diodes during light intensity regulation, whereby the uppermost graph, denoted U1, illustrates the phase angle of the rectified DC voltage U1 that is fed unfiltered, essentially half-wave rectified, into the primary side of the power supply 1 of fly-back type, the central graph, denoted M3, illustrates the phase angle of the DC voltage UCout that, reflected through the transformer, exits immediately from the secondary side of the transformer 10, and where the lowermost graph, S2, denotes the phase angle of the DC voltage that is delivered, in the form of the second control signal, to the linear current regulator 15, which in turn adapts its current production to the load and the output Uout based on the signal. The phase angle information in the second control signal S2 can be used to adjust in a linear manner the level of the current regulator 15 or it is created through pulse width modulation, i.e. as is shown in the lowermost graph in the figure in the form of a square wave (pulses 40) where the constant current regulator 15, controlled by the said pulses, delivers a current with different intervals so adapted that the load of LEDs is arranged to blink with a rate that has been selected such that the light emitted is experienced as a constant, unvarying light by the human eye.

The invention is not limited to what has been described above and shown in the drawings: it can be changed and modified in several different ways within the scope of the innovative concept defined by the attached patent claims.

## Claims

1. A method for monitoring and controlling the output current from an electronic drive system comprising a diode rectifier bridge (2) and a switched power supply (1) of fly-back type for the driving of a load with a Zener characteristic, for example, a non-linear load of light-emitting diodes, LEDs,
the method comprising
- converting, by the diode rectifier bridge, an AC voltage (Uin) to a rectified DC voltage (U1) and feeding the rectified DC voltage in its raw, unfiltered or solely half-wave rectified form to the input terminals of the power supply (1),
- controlling the output current (lout) from the power supply by means of pulse width modulation through a duty cycle defined as a ratio between the lengths of the ON and OFF phases of a switch (SW) in a primary circuit of the switched power supply,
- arranging a linear current regulator (15) at the output (UCout) of the switched power supply (1),
- regulating a current (L) through the load that is connected to the output (Uout) of the linear current regulator (15) by means of the linear current regulator (15),
**characterised in that** the method further comprises
- measuring a fall in voltage (M1-M2) across the linear current regulator (15),
- using the fall in voltage for the formation of a first control signal (S1) by a feedback loop (18, 19; 18, 19, 20), wherein the feedback loop forms an integrating circuit and the first control signal is output to a primary side of the power supply (1),
- using the first control signal (S1) for the control of the output voltage (Uout) of the power supply (1) through regulation of the duty cycle of the switch (SW), and
- assigning an integration time of the feedback loop (18, 19; 18, 19, 20) to be at least 10 times greater than the integral integration time or inertia of the switched power supply (1).

2. The method according to claim 1, comprising comparing an average difference (dV) between a first measurement signal (M1) that is measured as a voltage (UCout) across an output condensor (Cout), located in a secondary side of the power supply, and a second measurement signal (M2) that is measured as a voltage (Uout) across the load with a reference voltage (Uref) and holding the difference voltage sufficiently low relative to the said reference voltage such that the linear current regulator (15) continuously supplies the minimum required current strength to the load.

3. The method according to any one of claims 1-2, comprising obtaining a third measurement signal (M3) immediately from a secondary side of a transformer (10) of the power supply (1) and using said third measurement signal for the control of not only the current production from the current regulator (15) but also the duty cycle of the switch (SW) through leading it into the feedback loop (18, 19; 18, 19, 20).

4. The method according to claim 3, causing the third measurement signal (M3) to pass through a phase angle detector/comparator (30) for the formation of a second control signal (S2) before leading it to the current regulator (15) and the feedback loop (18, 19; 18, 19, 20), respectively.

5. An electronic drive system, comprising a switched power supply (1) of fly-back type and a diode rectifier bridge (2) configured to convert an AC voltage (Uin) to a rectified DC voltage (U1) to be fed into the switched power supply, for the driving of a load with a Zener characteristic, for example a non-linear load of light-emitting diodes, LEDs, whereby the output current (lout) from the power supply is controlled by means of pulse width modulation through a duty cycle defined as a ratio between the lengths of the ON and OFF phases of a switch in a primary circuit of the switched power supply, which drive system comprises a combination of:
- the switched power supply of fly-back type (1) being connected between the diode rectifier bridge and the load, whereby the switched power supply receives the rectified DC voltage at its input and converts it to another DC voltage intended to be used for the driving of the load connected to the output (Uout) of the system, and which switched power supply further comprises:
- a transformer (10) demonstrating a primary coil (10a) and a secondary coil (10b) where the first end of the primary coil is connected to the input rectified DC voltage (U1)
- a switch (SW) connected to the second end of the primary coil (10a), which switch when in its ON condition allows primary current to pass through the primary coil
- a control circuit (13) that controls the switch (SW) and that functions in current mode and exerts control in response to a first control signal (S1) formed by a feedback loop (18, 19; 18, 19, 20) of the electronic drive system, wherein the control circuit controls the output voltage (Uout) by regulating the duty cycle of the switch (SW),
wherein the switched power supply is of single-stage type (1) and is configured to receive the rectified DC voltage (U1) in a raw, unfiltered or in solely half-wave rectified form at its input, a linear current regulator (15) connected to the output of the switched power supply (1) and configured to regulate the current (I_{L}) through the load, **characterised in that** the electronic drive system further comprises
a difference voltage input (EV) arranged in the control circuit (13) that is a component of the switched power supply, a comparator (18) in the form of a differential amplifier, whereby the duty cycle of the switch (SW) is controlled by the control circuit based on the first control signal formed by the feedback loop according to voltage information on a fall in voltage (M1-M2) measured across the linear current regulator, and
wherein the feedback loop (18, 19; 18, 19, 20) forms an integrating circuit and is assigned an integration time to be at least 10 times greater than the integral integration time or inertia of the switched power supply (1).

6. Use of a drive system according to claim 5 for the driving of a load of light-emitting diodes, LEDs.

## Patentansprüche

1. Verfahren zur Überwachung und Steuerung des Ausgabestroms von einem elektronischen Antriebssystem umfassend eine Diodengleichrichterbrücke (2) und eine geschaltete Stromversorgung (1) des Flyback-Typs zum Antreiben einer Belastung mit einer Zener-Charakteristik, z.B. einer nichtlinearen Belastung von lichtemittierenden Dioden, LEDs,
welches Verfahren Folgendes umfasst
- Umwandeln, durch die Diodengleichrichterbrücke, einer Wechselspannung (Uin) in eine gleichgerichtete Gleichspannung (U1) und Zuführen der gleichgerichteten Gleichspannung in seiner rohen, ungefilterten oder ausschließlich halbwellengleichgerichteten Form zu den Eingangsanschlüssen der Stromversorgung (1),
- Steuern des Ausgangsstroms (lout) von der Stromversorgung durch eine Pulsweitenmodulation durch ein Tastverhältnis, definiert als ein Verhältnis zwischen den Längen der EIN- und AUS-Phasen eines Schalters (SW) in einer primären Schaltung der geschalteten Stromversorgung,
- Anordnen eines linearen Stromregulators (15) am Ausgang (UCout) der geschalteten Stromversorgung (1),
- Regeln eines Stroms (I_{L}) durch die Belastung, die mit dem Ausgang (Uout) des linearen Stromregulators (15) verbunden ist, mittels des linearen Stromregulators (15),
**dadurch gekennzeichnet, dass** das Verfahren weiter Folgendes umfasst
- Messen eines Spannungsabfalls (M1-M2) quer über den linearen Stromregulator (15),
- Anwenden des Spannungsabfalls zur Bildung eines ersten Steuersignals (S1) durch eine Rückkopplungsschleife (18, 19; 18, 19, 20), wobei die Rücckopplungsschleife eine integrierende Schaltung bildet und das erste Steuersignal für eine primäre Seite der Stromversorgung (1) Ausgang ist,
- Anwenden des ersten Steuersignals (S1) zur Steuerung der Ausgangsspannung (Uout) der Stromversorgung (1) durch Regelung des Tastverhältnisses des Schalters (SW), und
- Zuweisen eines Integrationszeitraums der Rückkopplungsschleife (18, 19; 18, 19, 20), um mindestens zehnmal größer als der integrale Integrationszeitraum oder die Trägheit der geschalteten Stromversorgung (1) zu sein.

2. Verfahren nach Anspruch 1, umfassend das Vergleichen einer Durchschnittsdifferenz (dV) zwischen einem ersten Messsignal (M1), das als eine Spannung (UCout) quer über einen Ausgangskondensator (Cout), angeordnet in einer sekundären Seite der Stromversorgung, gemessen wird und einem zweiten Messsignal (M2), das als eine Spannung (Uout) quer über die Belastung mit einer Referenzspannung (Uref) gemessen wird, und das Halten der Differenzspannung ausreichend niedrig im Verhältnis zur Referenzspannung, so dass der lineare Stromregulator (15) kontinuierlich den Mindestbedarf an Stromstärke an die Belastung versorgt.

3. Verfahren nach einem der Ansprüche 1-2, umfassend das Erhalten eines dritten Messsignals (M3) sofort von einer sekundären Seite eines Transformers (10) der Stromversorgung (1) und Anwenden des dritten Messsignals zur Steuerung von nicht nur der Stromproduktion vom Stromregulator (15), sondern auch vom Tastverhältnis des Schalters (SW) durch die Leitung davon in die Rückkopplungsschleife (18, 19; 18, 19, 20).

4. Verfahren nach Anspruch 3, Bewirkend dass das dritte Messsignal (M3) durch einen Phasewinkeldetektor/-Vergleicher (30) zur Bildung eines zweiten Steuersignals (S2) durchgeht ehe es zum Stromregulator (15) bzw. zur Rücckopplungsschleife (18, 19; 18, 19, 20) geleitet wird.

5. Elektronisches Antriebssystem, umfassend eine geschaltete Stromversorgung (1) des Flyback-Typs und eine Diodengleichrichterbrücke (2), ausgelegt zum Umwandeln einer Wechselspannung (Uin) in eine gleichgerichtete Gleichspannung (U1), die zur geschalteten Stromversorgung zugeführt werden soll, zum Antreiben einer Belastung mit einer Zener-Charakteristik, z.B. einer nichtlinearen Belastung von lichtemittierenden Dioden, LEDs, wobei der Ausgangsstrom (lout) von der Stromversorgung durch eine Pulsweitenmodulation durch ein Tastverhältnis gesteuert wird, definiert als ein Verhältnis zwischen den Längen der EIN- und AUS-Phasen eines Schalters in einer primären Schaltung der geschalteten Stromversorgung, welches Antriebssystem eine Kombination aus Folgendem umfasst:
- die geschaltete Stromversorgung des Flyback-Typs (1), die zwischen der Diodengleichrichterbrücke und der Belastung verbunden ist, wobei die geschaltete Stromversorgung die gleichgerichtete Gleichspannung an seinem Eingang empfängt und sie in eine andere Gleichspannung umwandelt, die zum Antreiben der Belastung, die mit dem Ausgang (Uout) des Systems verbunden ist, verwendet werden soll, und welche geschaltete Stromversorgung weiter Folgendes umfasst:
- einen Transformer (10) aufweisend eine primäre Spule (10a) und eine sekundäre Spule (10b), wobei das erste Ende der primären Spule mit dem Eingang der gleichgerichteten Gleichspannung (U1) verbunden ist
- einen Schalter (SW), der mit dem zweiten Ende der primären Spule (10a) verbunden ist, welcher Schalter, wenn er im EIN-Zustand ist, erlaubt, dass primärer Strom durch die primäre Spule durchgeht
- eine Steuerschaltung (13), die den Schalter (SW) steuert und im Strommodus funktioniert und Steuerung als Reaktion auf ein erstes Steuersignal (S1), das durch eine Rückkopplungsschleife (18, 19; 18, 19, 20) des elektronischen Antriebssystems gebildet wird, ausübt, wobei die Steuerschaltung die Ausgangsspannung (Uout) durch Regelung des Tastverhältnisses des Schalters (SW) steuert,
wobei die geschaltete Stromversorgung eines einstufigen Typs (1) und dafür ausgelegt ist, die gleichgerichtete Gleichspannung (U1) in einer rohen, ungefilterten oder ausschließlich halbwellengleichgerichteten Form am Eingang zu empfangen,
einen linearen Stromregulator (15), der mit dem Ausgang der geschalteten Stromversorgung (1) verbunden und dafür ausgelegt ist, en Strom (I_{L}) durch die Belastung zu regeln,
**dadurch gekennzeichnet, dass** das elektronische Antriebssystem weiter Folgendes umfasst
einen Differenzspannungseingang (EV), der in der Steuerschaltung (13) angeordnet und eine Komponente der geschalteten Stromversorgung ist, einen Vergleicher (18) in Form eines Differenzialverstärkers, wobei das Tastverhältnis des Schalters (SW) durch die Steuerschaltung basierend auf dem ersten Steuersignal gesteuert wird, welches durch die Rückkopplungsschleife gemäß Spannungsinformation über einen Spannungsabfall (M1-M2), der quer über den linearen Stromregulator gemessen wird, gebildet wird, und
wobei die Rückkopplungsschleife (18, 19; 18, 19, 20) eine integrierende Schaltung bildet, und zu der einen Integrationszeitraum zugewiesen ist, um mindestens zehnmal größer als der integrale Integrationszeitraum oder die Trägheit der geschalteten Stromversorgung (1) zu sein.

6. Anwendung eines Antriebssystems nach Anspruch 5 zum Antreiben einer Belastung von lichtemittierenden Dioden, LEDs.

## Revendications

1. Procédé de surveillance et de commande du courant de sortie d'un système d'entraînement électronique comprenant un pont redresseur de diode (2) et une alimentation électrique commutée (1) de type fly-back pour l'entraînement d'une charge avec une caractéristique Zener, par exemple, une charge non linéaire d'émission de lumière diodes, LED,
ledit procédé comprenant les étapes consistant à
- convertir, par le pont redresseur de diode, une tension alternative (Uin) en une tension continue redressée (U1) et alimenter la tension continue redressée sous sa forme brute, non filtrée ou uniquement sous forme à demi-onde redressée aux bornes d'entrée de l'alimentation électrique (1),
- commander la tension de sortie (Uout) de l'alimentation électrique au moyen d'une modulation de largeur d'impulsion par un cycle de service défini en tant que rapport entre les longueurs des phases allumée et éteinte d'un commutateur (SW) dans un circuit primaire de l'alimentation électrique commutée,
- arranger un régulateur de courant linéaire (15) à la sortie (UCout) de l'alimentation électrique commutée (1),
- réguler un courant (I_{L}) par la charge qui est connectée à la sortie (Uout) du régulateur de courant linéaire (15) au moyen du régulateur de courant linéaire (15),
**caractérisé en ce que** le procédé comprend en outre les étapes consistant à
- mesurer une chute de tension (M1-M2) à travers le régulateur de courant linéaire (15),
- utiliser la chute de tension pour la formation d'un premier signal de commande (S1) par une boucle de rétroaction (18, 19; 18, 19, 20), la boucle de rétroaction formant un circuit d'intégration et le premier signal de commande étant sorti à un côté primaire de l'alimentation électrique (1),
- utiliser le premier signal de commande (S1) pour la commande de la tension de sortie (Uout) de l'alimentation électrique (1) par la régulation du cycle de service du commutateur (SW), et
- l'attribution d'un temps d'intégration de la boucle de rétroaction (18, 19; 18, 19, 20) de manière à être 10 fois supérieur au temps d'intégration intégré ou inertie de l'alimentation électrique commutée (1).

2. Procédé selon la revendication 1, comprenant la comparaison d'une différence moyenne (dV) entre un premier signal de mesure (M1) qui est mesuré en tant que tension (UCout) à travers un condenseur de sortie (Cout), situé dans le côté secondaire de l'alimentation électrique, et un deuxième signal de mesure (M2) qui est mesuré en tant que tension (Uout) à travers la charge avec une tension de référence (Uref) et maintenir la tension de différence suffisamment faible par rapport à ladite tension de référence pour que le régulateur de courant linéaire (15) fournisse en continu la force de courant minimale requise à la charge.

3. Procédé selon l'une quelconque des revendications 1 à 2, comprenant l'obtention d'un troisième signal de mesure (M3) immédiatement du côté secondaire d'un transformateur (10) de l'alimentation électrique (1) et l'utilisation du troisième signal de mesure pour la commande non seulement de la production de courant provenant du régulateur de courant (15) mais aussi du cycle de service du commutateur (SW) en le menant dans la boucle de rétroaction (18, 19; 18, 19, 20).

4. Procédé selon la revendication 3, par lequel le troisième signal de mesure (M3) est amené à traverser un détecteur / comparateur d'angle de phase (30) pour la formation d'un deuxième signal de commande (S2) avant qu'il ne soit conduit respectivement au régulateur de courant (15) et à la boucle de rétroaction (18, 19; 18, 19, 20).

5. Système d'entraînement électronique comprenant une alimentation électrique commutée (1) de type fly-back et un pont redresseur de diode (2), configuré pour convertir une tension alternative (Uin) en une tension continue redressée (U1) destinée à alimenter dans l'alimentation électrique commutée pour l'entraînement d'une charge avec une caractéristique Zener, par exemple une charge non linéaire de diodes électroluminescentes, LED, le courant de sortie (lout) provenant de l'alimentation électrique étant commandé au moyen d'une modulation de largeur d'impulsion à travers le cycle de service défini en tant que rapport entre les longueurs des phases allumée et éteinte d'un commutateur dans un circuit primaire de l'alimentation électrique commutée, ledit système d'entraînement comprenant une combinaison :
- de l'alimentation électrique commutée de type fly-back (1) étant connectée entre le pont redresseur de diode et la charge, si bien que l'alimentation électrique commutée reçoit la tension continue redressée à son entrée et la convertit en une autre tension continue destinée à être utilisée pour l'entraînement de la charge connectée à la sortie (Uout) du système, et dont l'alimentation électrique commutée comprend en outre:
- un transformateur (10) présentant une bobine primaire (10a) et une bobine secondaire (10b), la première extrémité de la bobine primaire étant connectée à l'entrée redressée de tension continue (U1)
- un commutateur (SW) connecté à la deuxième extrémité de la bobine primaire (10a), le commutateur lorsqu'il est à l'état allumé permettant au courant primaire de traverser la bobine primaire
- un circuit de commande (13) commandant le commutateur (SW) et qui fonctionne dans le mode courant et exerce une commande en réponse à un signal de commande (S1) formé par une boucle de rétroaction (18, 19; 18, 19, 20) du système d'entraînement électronique, le circuit de commande commandant la tension de sortie (Uout) en régulant le cycle de service du commutateur (SW),
dans lequel l'alimentation électrique commutée est du type à un seul étage (1) et est configuré pour recevoir la tension continue redressée (U1) sous forme brute, non filtrée ou uniquement sous forme à demi-onde redressée à son entrée,
un régulateur de courant linéaire (15) connecté à la sortie de l'alimentation électrique commutée (1) et configuré pour réguler le courant (I_{L}) à travers la charge,
**caractérisé en ce que** le système d'entraînement électrique comprend en outre :
une entrée de tension différentielle (EV) disposée dans le circuit de commande (13) qui est un composant de l'alimentation électrique commutée, un comparateur (18) sous la forme d'un amplificateur différentiel, le cycle de servie du commutateur (SW) étant commandé par le circuit de commande sur la base d'un premier signal de commande formé par la boucle de rétroaction selon une information de tension sur une chute de tension (M1-M2) mesurée à travers le régulateur de courant linéaire, et
dans lequel la boucle de rétroaction (18, 19; 18, 19, 20) forme un circuit d'intégration et est attribué d'un temps d'intégration de manière à être 10 fois supérieur au temps d'intégration intégré ou inertie de l'alimentation électrique commutée (1).

6. Utilisation d'un système d'entraînement selon la revendication 5 pour l'entraînement d'une charge de diodes électroluminescentes, LED.
